# EUROPEAN PATENT SPECIFICATION

(11) **EP 4 411 196 B1**
(45) Date of publication and mention of the grant of the patent: **22.10.2025**
(21) Application number: 23154910.6
(22) Date of filing: 03.02.2023
(51) Int. Cl.: F16L 41/12

(54) **TAPPING SADDLE AND USE OF SAID TAPPING SADDLE**
GEWINDESCHNEIDSATTEL UND NUTZUNGSVERFAHREN
SELLE DE PIQUAGE ET METHODE D'UTILISATION

(43) Date of publication of application: 07.08.2024
(73) Proprietor: Isiflo AS, 2830 Raufoss (NO)
(72) Inventor: Stjern, Tor Arne, 2830 Raufoss (NO)
(74) Representative: Plougmann Vingtoft a/s

(56) References cited:
- DE-A1- 102007 000 882
- GB-A- 1 269 499
- US-A- 4 613 171

## Description

### FIELD OF THE INVENTION

The present invention relates to a tapping saddle for establishing a fluid connection between a first pipe and a second pipe. In particular, it relates to a tapping saddle that can be used to obtain a fluid-tight connection without the need for welding.

### BACKGROUND OF THE INVENTION

A tapping saddle, such as those known from US4613171, for fluidly connecting a first pipe with a second pipe is known within a number of applications. It may e.g. be used for water applications, such as for drinking water, or for gas applications, such as for natural gas or hydrogen. Thus, the first pipe will typically be a main pipe for supplying a fluid from a source to a plurality of user locations. The second pipe will typically be one of several smaller pipes branching off from the main pipe in order to transfer the fluid towards e.g. a house. The connections being established with a tapping saddle are typically located in the ground, including under roads.

A known potential problem with connections established by use of tapping saddles is that external loads, which may e.g. be due to heavy traffic or fill masses such as gravel or stones, may cause deformation of the first pipe, and there is a risk of such deformations being so large that they result in leakage between the first pipe and the tapping saddle. In order to prevent the fluid flowing in the pipes from leaking out into the surrounding, it is a known procedure to provide a welding connection around the mechanical connection, typically by electrofusion welding. However, such a welding requires the use of a welding apparatus as well as access to electricity at the location of installation. Furthermore, in order to ensure that at least the welded connection does not leak even if the mechanical connection provided by the tapping saddle breaks, the welding must be of high quality. Typically, special tests and possibly also certifications thereof are needed. This makes the known procedure complicated and time consuming.

Hence, an improved tapping saddle would be advantageous.

### OBJECT OF THE INVENTION

It is an object of the present invention to provide a tapping saddle with which it is possible to establish a fluid-tight connection between a first and a second pipe.

It is another object of the present invention to provide a tapping saddle which is more efficient to install than a known tapping saddle.

It is another object of the present invention to provide a tapping saddle that can be mounted to the supply pipe without interrupting service; i.e. including when the supply pipe is under full pressure.

It is an object of at least some embodiments of the present invention to provide a tapping saddle with which it is possible to establish a fluid-tight connection between a first and a second pipe without the need for welding.

It is a further object of the present invention to provide an alternative to the prior art.

In particular, it may be seen as an object of the present invention to provide a tapping saddle that solves the above mentioned problems of the prior art.

### SUMMARY OF THE INVENTION

The above-described object and several other objects are intended to be obtained in a first aspect of the invention by providing a tapping saddle comprising:
- a housing for being tightened against a first pipe in order to establish a fluid connection between the first pipe and a second pipe, the housing comprising:
   - a cavity forming a part of the fluid connection between the first and the second pipes when in use,
   - a through-going opening configured to allow for establishing a threaded hole in a pipe wall of the first pipe and for fastening the tapping saddle to the first pipe, the through-going opening being provided with a closure for closing the cavity at an end facing away from the hole to be established in the pipe wall,
- a compensator arranged in the cavity:
   - circumferentially surrounded by the housing, and
   - adjacent to an outer surface of the pipe wall,
   the compensator having a through-going compensator bore configured to encircle the threaded hole at the outer surface of the pipe wall, and
- an insert configured to be arranged partly within the compensator bore, the insert comprising:
   - a through-going insert bore,
   - threading at an outer surface of a first end of the insert, the threading being configured to engage with the threaded hole in the pipe wall when in use, and
   - a gripping element at a second end of the insert, the gripping element being configured to engage with a mating surface of the compensator and bias the compensator towards the pipe wall, when the threading of the insert is engaged with the threaded hole in the pipe wall.

A tapping saddle according to the invention may typically be used either for water applications or for gas applications as explained above. Thus, the first pipe will typically be a main pipe for supplying a fluid from a source to a plurality of user locations. The second pipe will typically be one of several smaller pipes branching off from the main pipe in order to transfer the fluid towards e.g. a house. The materials for the different components as well as the needed sealing capabilities are to be selected to match an actual application. This will be determined as part of the design process and will e.g. include ensuring that the relevant standards for a given application are met. When referring to "fluid-tight" in the following, it may be either liquid-tight or gas-tight depending on the actual application.

The compensator is preferably configured to slide along an inner surface of the housing when the insert is screwed into the threaded hole in the pipe wall. During use of the tapping saddle, a possible high pressure in the cavity may also result in a small deformation and/or sliding of the compensator along the inner surface of the housing.

What is referred to as "insert" could also be referred to as "threaded insert" or "compensator holder".

In some embodiments of the invention, the compensator is made from a resilient material, such as rubber, polytetrafluoroethylene (PTFE), polyoxymetylene (POM), or silicone. However, any material that can provide a required fluid-tightness and withstand the other mechanical, thermal and chemical requirements is covered by the scope of protection. Such a compensator may be configured to form a fluid-tight sealing with the pipe wall when in use without the need for further sealing. An example of such an embodiment will be shown in the figures. If desired, a compensator made from a resilient material may also be used in combination with one or more sealing rings.

The tapping saddle may further comprise a first sealing ring configured to be arranged between the compensator and the pipe wall when in use in order to form a fluid-tight sealing there-between. This will typically be necessary, when the compensator is made from a material that is so stiff that it cannot deform sufficiently to form the required tightening on its own. Such a compensator may be made from any suitable material, such as metal, polymer, ceramic, or composite. A first sealing ring will prevent a flow of liquid from the first pipe via the threaded connection between the pipe wall and the insert.

Alternatively or in combination therewith, the tapping saddle may further comprise a second sealing ring arranged between the compensator and the housing in order to form a fluid-tight sealing there-between. Such a second sealing ring will prevent leakage from the cavity via the passage between the compensator and the part of the housing circumferentially surrounding the compensator. Alternatively, this passage may be sufficiently fluid-tight by a tight fit between the compensator and the housing.

In some embodiments of the invention comprising both first and second sealing rings, these first and second sealing rings may form parts of a unitary sealing element.

In such embodiments with a unitary sealing element, the sealing element may further comprise a third sealing ring configured to form a sealing between the compensator and both the pipe wall and the housing when in use. Hereby a higher safety against leakage can be obtained, since in both possible leakage-ways, two sealing rings must be bypassed before a leakage happens. Examples of the different types of sealing rings will be shown in the figures.

In any of the embodiments comprising one or more sealing rings, the compensator may comprise one or more ring grooves for supporting the one or more sealing rings. Hereby a higher safety against unintended movement of the one or more sealing rings is obtained.

The gripping element may be an annular flange extending radially away from the insert bore. An example of such an embodiment will be illustrated in the figures. Non-limiting examples of alternative gripping elements are an annular flange extending at another angle than radially, or a plurality of discrete protrusions.

In some embodiments of the invention, an area of a surface of the compensator facing towards the cavity is larger than an area of the threading of the insert configured to be in threaded engagement with the threaded bore in the pipe wall when in use. Hereby it is obtained that an overpressure inside the cavity will result in a lower loading at the threaded connection between the insert and the pipe wall and thereby a resulting lowering of a risk of damaging the threading.

In some embodiments of the invention, the outer surface of the insert is provided with threading extending beyond the first end at least partly towards the gripping element, and a radially inwardly facing surface of the compensator is provided with threading configured to engage with the threading at the outer surface of the insert. Hereby the forces between the insert and the compensator will be spread over a larger area, whereby the risk of misalignment or damage is lowered.

The housing may further comprise a coupling element configured to be fluid-tightly connected to the second pipe during use. Different types of coupling elements may be known from prior art tapping saddles, or it may be developed particularly for use in the present invention. Alternatively, the coupling element may be a separate component not forming part of the tapping saddle.

In a second aspect, the invention relates to a method of establishing a fluid connection between a first pipe and a second pipe by use of a tapping saddle according to the first aspect of the invention, the method comprising the following steps:
- fastening the housing, with the compensator arranged therein, onto an outer surface of the pipe wall of the first pipe,
- connecting the second pipe to the housing,
- establishing the threaded hole in the pipe wall via the through-going opening in the housing,
- screwing the threading of the insert into the threaded hole to thereby engage the gripping element with a mating surface of the compensator and bias the compensator towards the pipe wall, so that the compensator and/or the first sealing ring, when present, is brought into engagement with the pipe wall, and
- closing the cavity with the closure.

The housing will typically consist of a main housing body and a bridle so that the housing can be fastened to the outer surface of the first pipe by arranging the main housing body and the bridle from opposite sides of the pipe and securing them to each other by use of bolt connections. However, other ways of mounting the housing is also covered by the scope of protection, such as mounting including additional brackets or welding. Further details about the method will be explained in relation to the figures.

The first and second aspects of the present invention may be combined so that all the features mentioned for the first aspect may also be present in relation to the second aspect. These and other aspects of the invention will be apparent from and elucidated with reference to the embodiments described hereinafter.

### BRIEF DESCRIPTION OF THE FIGURES

The tapping saddle according to the invention will now be described in more detail with regard to the accompanying figures. The figures show one way of implementing the present invention and is not to be construed as being limiting to other possible embodiments falling within the scope of the attached claim set.
Figures 1.a-1.c schematically show a prior art tapping saddle.
Figures 2.a and 2.b schematically show the risk of leakage with a prior art tapping saddle.
Figures 3.a and 3.b schematically show an embodiment of a tapping saddle according to the present invention. Figures 3.a shows the tapping saddle in a mounted state ready for use, and figure 3.b shows an exploded view of the tapping saddle before mounting.
Figures 4.a and 4.b schematically show alternatives to the two separate sealing rings in figure 3. Figures 4.a shows a sealing element with three sealing rings, and figure 4.b shows a compensator suitable for use without sealing rings.
Figure 5 schematically shows a partial view of an embodiment of the invention in which the compensator is provided with threading.
Figure 6 is a flow-chart of a method according to the second aspect of the invention.

### DETAILED DESCRIPTION OF AN EMBODIMENT

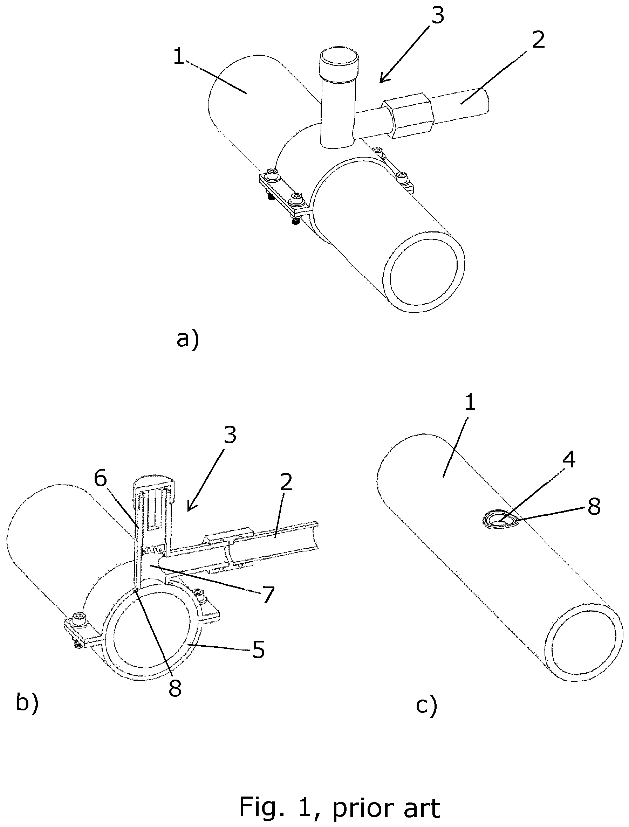

A tapping saddle 3 is a device that is used for establishing a fluid connection between a first pipe 1 and a second pipe 2 as shown schematically in figure 1. Figure 1.a shows a three-dimensional view of a prior art tapping saddle 3, and figure 1.b shows a cross-sectional view illustrating the fluid connection from the first pipe 1 to the second pipe 2 via a hole 4 in the pipe wall 5 of the first pipe 1. The tapping saddle 3 comprises a housing 6 with a cavity 7 forming a part of the fluid connection between the first and the second pipes 1,2. As described above, the housing 6 may e.g. consist of a main housing body and a bridle so that the housing 6 can be fastened to the outer surface of the first pipe 1 by arranging the main housing body and the bridle from opposite sides of the pipe and securing them to each other by use of bolt connections. However, since the outer design of the housing 6 and the specific way it is mounted to the first pipe 1 is not special for the present invention, these design details are not included in the figures. A sealing ring 8 is arranged around the hole 4 in the pipe wall 5 of the first pipe 1 in order to ensure a fluid-tight sealing. Figure 1.c is a closer view of the sealing ring in figure 1.b.

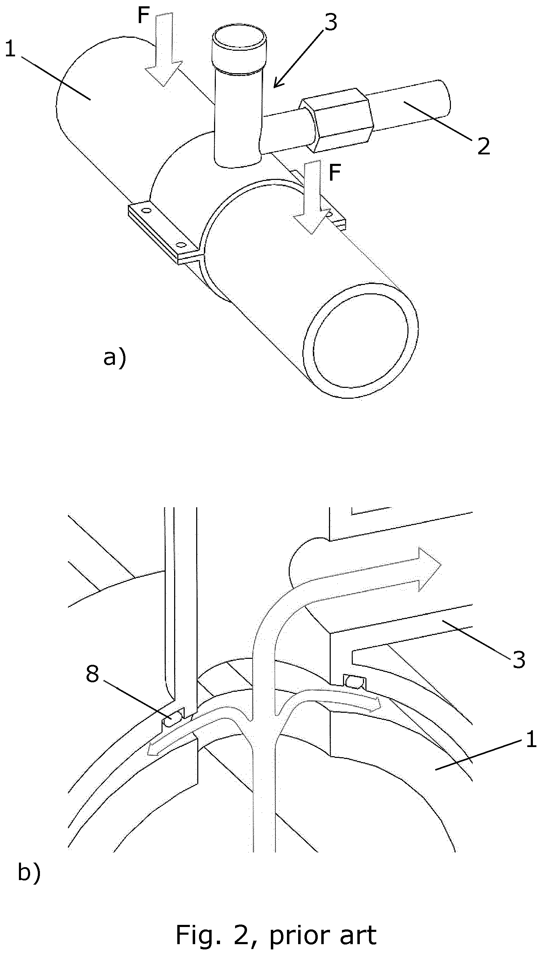

Figure 2 schematically shows a possible problem with a connection established with a prior art tapping saddle 3. Figure 2.a shows external loads F, which may e.g. be due to heavy traffic, if the first pipe 1 are arranged below a road. Such loads may be large enough to cause deformation of the first pipe 1, and as shown schematically and exaggerated in figure 2.b, the deformations may be so large that they result in leakage between the first pipe 1 and the tapping saddle 3. The intended flow is shown with the arrow continuing into the second pipe, and the leaking flow is shown with the curved arrows. As also explained above, in order to prevent the fluid flowing in the pipes from leaking out into the surroundings, it is a known procedure to provide a welding connection (not shown) around the mechanical connection. However, such a welding requires the use of a welding apparatus as well as access to electricity at the location of installation. Furthermore, in order to ensure that at least the welded connection does not leak even if the mechanical connection formed by the tapping saddle 3 breaks, the welding must be of high quality, and typically additional tests and possibly also certifications thereof are needed. This makes the known procedure complicated and time consuming.

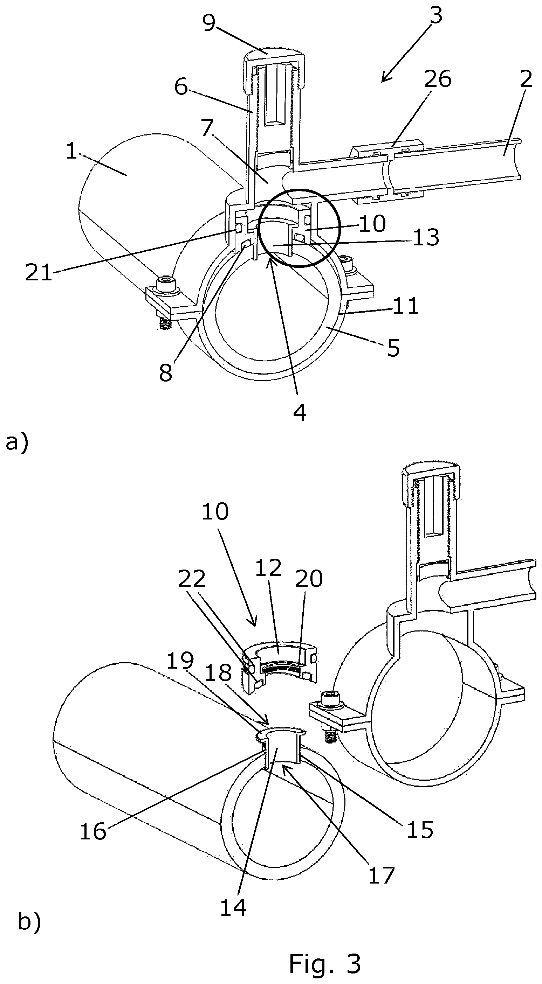

Figures 3.a and 3.b schematically show an embodiment of a tapping saddle 3 according to the present invention. Figures 3.a shows the tapping saddle 3 in a mounted state ready for use, and figure 3.b shows an exploded view of the tapping saddle 3 before mounting. The housing has a through-going opening configured to allow for establishing a threaded hole 4 in a pipe wall 5 of the first pipe 1 and for fastening the tapping saddle 3 to the first pipe 1; the details of this process will be described below. The through-going opening is provided with a closure 9 for closing the cavity 7 at an end facing away from the hole 4 in the pipe wall 5. A compensator 10 is arranged in the cavity 7 so that it is circumferentially surrounded by the housing 6, and so that it is adjacent to an outer surface 11 of the pipe wall 5. The compensator 10 has a through-going compensator bore 12 configured to surround the threaded hole 4 at the outer surface 11 of the pipe wall 5. The tapping saddle 3 further comprises an insert 13 which, when in use, is arranged partly within the compensator bore 12. The insert 13 has a through-going insert bore 14, which is co-axial with the compensator bore 12 and with the hole 4 in the first pipe 1. The insert 13 has a threading 15 at an outer surface 16 of a first end 17. The threading 15 is configured to engage with the threaded hole 4 in the pipe wall 5 when the tapping saddle 3 is in use as shown in figure 3. At the second end 18 of the insert 13, there is a gripping element 19 in the form of an annular flange extending radially away from the insert bore 14. The gripping element 19 is configured to engage with a mating surface 20 of the compensator 10 and bias the compensator 10 towards the pipe wall 5, when the threading 15 of the insert 13 is engaged with the threaded hole 4 in the pipe wall 5. In the embodiment in figure 3, a first sealing ring 8 is arranged between the compensator 10 and the pipe wall 5 in order to form a fluid-tight sealing there-between and a second sealing ring 21 arranged between the compensator 10 and the housing 6 in order to form a fluid-tight sealing there-between. The illustrated compensator 10 comprises ring grooves 22 for supporting the first and second sealing rings 8,21 to ensure that they are maintained in place during use. In this embodiment, an area of surfaces of the compensator 10 facing towards the cavity 7 is larger than an area of the threading 15 of the insert 13 configured to be in threaded engagement with the threaded bore 4 in the pipe wall 5; the advantages thereof were explained above.

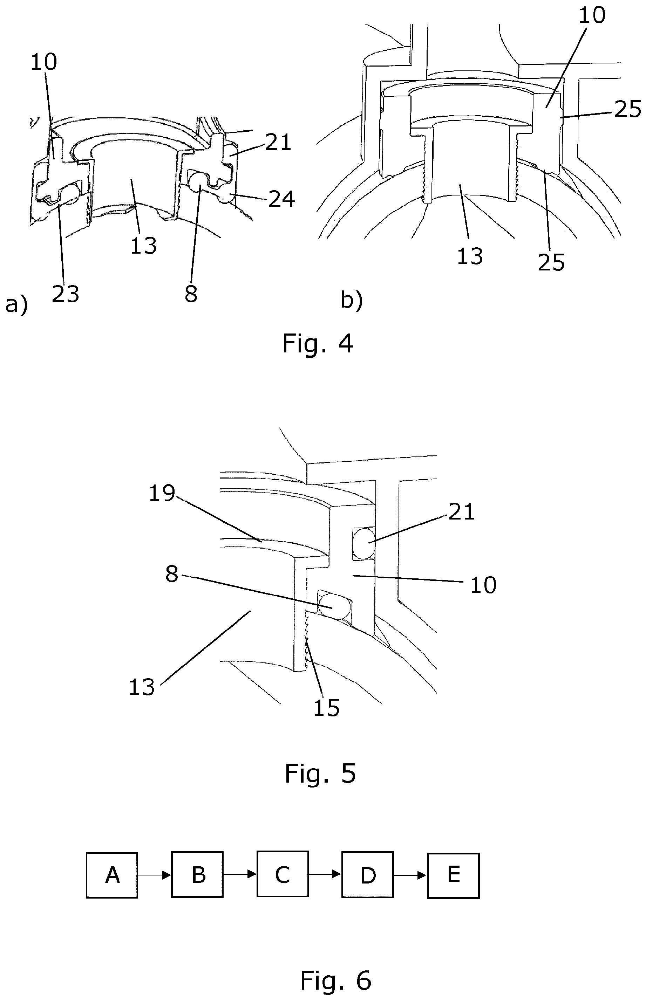

Figure 4 schematically shows two alternatives to having the two separate first and second sealing rings of figure 3. Figure 4.a shows the first and second sealing rings 8,21 forming parts of a unitary sealing element 23. This embodiment further comprises a third sealing ring 24 configured to form a sealing between the compensator 10 and both the pipe wall 5 and the housing 6. Figure 4.b shows an embodiment without sealing rings, but wherein the compensator 10 is made from a resilient material, such as rubber, polytetrafluoroethylene (PTFE), polyoxymetylene (POM), or silicone. By ensuring tight tolerances, it will be possible to have the sealing function fulfilled by the compensator 10 on its own. As shown in the figure, the compensator 10 will in such an embodiment typically be provided with bulges 25 e.g. at the locations where the sealing rings would otherwise be located.

Figure 5 schematically shows a partial view of an embodiment of the invention in which the compensator 10 is provided with threading for engaging with mating threading on the insert 13 in order to improve the mutual fixation of these parts. The figure shows a close-up view of the region marked with a circle in figure 3.a. As shown, the outer surface of the insert 13 is provided with threading extending beyond the first end 17 at least partly towards the gripping element 19. A radially inwardly facing surface of the compensator 10 is provided with threading configured to engage with the threading at the outer surface of the insert 13.

Figure 6 is a flow diagram showing a method of establishing a fluid connection between a first pipe 1 and a second pipe 2 by use of a tapping saddle 3 according to the invention. The method comprises the following steps:
A: Fastening the housing 6 onto an outer surface 11 of the pipe wall 5 of the first pipe 1.
B: Connecting the second pipe 2 to the housing 6.
C. Establishing the threaded hole (4) in the pipe wall (5) via the through-going opening in the housing 6.
D. Screwing the threading of the insert 13 into the threaded hole 4 to thereby engage the gripping element 19 with a mating surface 20 of the compensator 10 and bias the compensator 10 towards the pipe wall 5, so that the compensator 10 and/or the first sealing ring 8, when present, is brought into engagement with the pipe wall 5.
E: Closing the cavity 7 with the closure 9.

Typically the method would further include, between steps B and C, a step of applying pressure to the tapping saddle 3 via the second pipe 2 to test that the housing 6 has been correctly fastened with all relevant sealing interfaces functioning as required. At this time, the sealing around the location where the threaded hole 4 in the pipe wall 5 is to be established is obtained by the compensator 10 and the one or more sealing rings, when present, being pressed against the pipe wall 5 as described above. Thereby, the insert 13 can be screwed into its position without having to cope with the resistance it would be to otherwise have to compress the compensator 10 and/or the sealing element 8 during the screw-in procedure. This reduces the overall torque necessary to accomplish the hole-making process.

A method as described above ensures that the connection between the first and the second pipes 1,2 can be established with full pressure in the first pipe 1; the first pipe 1 typically being the supply pipe.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. In addition, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. Tapping saddle (3) comprising:
- a housing (6) for being tightened against a first pipe (1) in order to establish a fluid connection between the first pipe (1) and a second pipe (2), the housing (6) comprising:
- a cavity (7) forming a part of the fluid connection between the first and the second pipes (1,2) when in use,
- a through-going opening configured to allow for establishing a threaded hole (4) in a pipe wall (5) of the first pipe (1) and for fastening the tapping saddle (3) to the first pipe (1), the through-going opening being provided with a closure (9) for closing the cavity (7) at an end facing away from the hole (4) to be established in the pipe wall (5),
- a compensator (10) arranged in the cavity (7):
- circumferentially surrounded by the housing (6), and
- adjacent to an outer surface (11) of the pipe wall (5),
the compensator (10) having a through-going compensator bore (12) configured to encircle the threaded hole (4) at the outer surface (11) of the pipe wall (5), and
- an insert (13) configured to be arranged partly within the compensator bore (12), the insert (13) comprising:
- a through-going insert bore (14),
- threading (15) at an outer surface (16) of a first end (17) of the insert (13), the threading (15) being configured to engage with the threaded hole (4) in the pipe wall (5) when in use, and
- a gripping element (19) at a second end (18) of the insert (13), the gripping element (19) being configured to engage with a mating surface (20) of the compensator (10) and bias the compensator (10) towards the pipe wall (5), when the threading (15) of the insert (13) is engaged with the threaded hole (4) in the pipe wall (5).

2. Tapping saddle (3) according to claim 1, wherein the compensator (10) is made from a resilient material, such as rubber, polytetrafluoroethylene (PTFE), polyoxymetylene (POM), or silicone.

3. Tapping saddle (3) according to claim 1 or 2, further comprising a first sealing ring (8) configured to be arranged between the compensator (10) and the pipe wall (5) when in use in order to form a fluid-tight sealing there-between.

4. Tapping saddle (3) according to any of the preceding claims, further comprising a second sealing ring (21) arranged between the compensator (10) and the housing (6) in order to form a fluid-tight sealing there-between.

5. Tapping saddle (3) according to claim 4, wherein the first and second sealing rings (8,21) form parts of a unitary sealing element (23).

6. Tapping saddle (3) according to claim 5, wherein the sealing element (23) comprises a third sealing ring (24) configured to form a sealing between the compensator (10) and both the pipe wall (5) and the housing (6) when in use.

7. Tapping saddle (3) according to any of claims 3 to 5, wherein the compensator (10) comprises one or more ring grooves (22) for supporting the one or more sealing rings (8,21,24).

8. Tapping saddle (3) according to any of the preceding claims, wherein the gripping element (19) is an annular flange extending radially away from the insert bore (14).

9. Tapping saddle (3) according to any of the preceding claims, wherein an area of a surface of the compensator (10) facing towards the cavity (7) is larger than an area of the threading (15) of the insert (13) configured to be in threaded engagement with the threaded bore (4) in the pipe wall (5) when in use.

10. Tapping saddle (3) according to any of the preceding claims, wherein:
- the outer surface (16) of the insert (13) is provided with threading extending beyond the first end at least partly towards the gripping element (19), and
- a radially inwardly facing surface of the compensator (10) is provided with threading configured to engage with the threading (15) at the outer surface (16) of the insert (13).

11. Tapping saddle (3) according to any of the preceding claims, wherein the housing (6) further comprises a coupling element (26) configured to be fluid-tightly connected to the second pipe (2) during use.

12. Method of establishing a fluid connection between a first pipe (1) and a second pipe (2) by use of a tapping saddle (3) according to any of the preceding claims, the method comprising the following steps:
- fastening the housing (6), with the compensator (10) arranged therein, onto an outer surface (11) of the pipe wall (5) of the first pipe (1),
- connecting the second pipe (2) to the housing (6),
- establishing the threaded hole (4) in the pipe wall (5) via the through-going opening in the housing (6),
- screwing the threading (15) of the insert (13) into the threaded hole (4) to thereby engage the gripping element (19) with a mating surface (20) of the compensator (10) and bias the compensator (10) towards the pipe wall (5), so that the compensator (10) and/or the first sealing ring (8), when present, is brought into engagement with the pipe wall (5), and
- closing the cavity (7) with the closure (9).

## Patentansprüche

1. Anbohrschelle (3), umfassend:
- ein Gehäuse (6), das gegen ein erstes Rohr (1) angezogen wird, um eine Fluidverbindung zwischen dem ersten Rohr (1) und einem zweiten Rohr (2) einzurichten, wobei das Gehäuse (6) Folgendes umfasst:
- einen Hohlraum (7), der im Gebrauch einen Teil der Fluidverbindung zwischen dem ersten und dem zweiten Rohr (1, 2) bildet,
- eine durchgehende Öffnung, die ausgestaltet ist, um das Einrichten eines Gewindeloches (4) in einer Rohrwand (5) des ersten Rohres (1) und das Befestigen der Anbohrschelle (3) an dem ersten Rohr (1) zu ermöglichen, wobei die durchgehende Öffnung mit einem Verschluss (9) zum Verschließen des Hohlraums (7) an einem Ende, das von dem in der Rohrwand (5) einzurichtenden Loch (4) weg weist, versehen ist,
- einen in dem Hohlraum (7) angeordneten Kompensator (10):
- der vom Gehäuse (6) in Umfangsrichtung umgeben ist und
- der an eine Außenfläche (11) der Rohrwand (5) angrenzt, wobei der Kompensator (10) eine durchgehende Kompensatorbohrung (12) aufweist, die ausgestaltet ist, um das Gewindeloch (4) an der Außenfläche (11) der Rohrwand (5) zu umschließen, und
- einen Einsatz (13), der ausgestaltet ist, um teilweise innerhalb der Kompensatorbohrung (12) angeordnet zu werden, wobei der Einsatz (13) Folgendes umfasst:
- eine durchgehende Einsatzbohrung (14),
- ein Gewinde (15) an einer Außenfläche (16) eines ersten Endes (17) des Einsatzes (13), wobei das Gewinde (15) ausgestaltet ist, um im Gebrauch mit dem Gewindeloch (4) in der Rohrwand (5) in Eingriff zu kommen, und
- ein Greifelement (19) an einem zweiten Ende (18) des Einsatzes (13), wobei das Greifelement (19) ausgestaltet ist, um mit einer Gegenfläche (20) des Kompensators (10) in Eingriff zu kommen und den Kompensator (10) hin zur Rohrwand (5) vorzuspannen, wenn das Gewinde (15) des Einsatzes (13) mit dem Gewindeloch (4) in der Rohrwand (5) in Eingriff steht.

2. Anbohrschelle (3) nach Anspruch 1, wobei der Kompensator (10) aus einem nachgiebigen Material, wie etwa Gummi, Polytetrafluorethylen (PTFE), Polyoxymethylen (POM) oder Silikon, hergestellt ist.

3. Anbohrschelle (3) nach Anspruch 1 oder 2, ferner umfassend einen ersten Dichtungsring (8), der ausgestaltet ist, um im Gebrauch zwischen dem Kompensator (10) und der Rohrwand (5) angeordnet zu werden, um dazwischen eine fluiddichte Abdichtung zu bilden.

4. Anbohrschelle (3) nach irgendeinem der vorhergehenden Ansprüche, ferner umfassend einen zweiten Dichtungsring (21), der zwischen dem Kompensator (10) und dem Gehäuse (6) angeordnet ist, um dazwischen eine fluiddichte Abdichtung zu bilden.

5. Anbohrschelle (3) nach Anspruch 4, wobei der erste und der zweite Dichtungsring (8, 21) Teile eines einheitlichen Dichtungselements (23) bilden.

6. Anbohrschelle (3) nach Anspruch 5, wobei das Dichtungselement (23) einen dritten Dichtungsring (24) umfasst, der ausgestaltet ist, um im Gebrauch eine Abdichtung zwischen dem Kompensator (10) und sowohl der Rohrwand (5) als auch dem Gehäuse (6) zu bilden.

7. Anbohrschelle (3) nach irgendeinem der Ansprüche 3 bis 5, wobei der Kompensator (10) eine oder mehrere Ringnuten (22) zum Tragen des einen oder der mehreren Dichtungsringe (8, 21, 24) umfasst.

8. Anbohrschelle (3) nach irgendeinem der vorhergehenden Ansprüche, wobei das Greifelement (19) ein ringförmiger Flansch ist, der sich radial von der Einsatzbohrung (14) weg erstreckt.

9. Anbohrschelle (3) nach irgendeinem der vorhergehenden Ansprüche, wobei ein Bereich einer Fläche des dem Hohlraum (7) zugewandten Kompensators (10) größer ist als ein Bereich des Gewindes (15) des Einsatzes (13), der ausgestaltet ist, um im Gebrauch mit der Gewindebohrung (4) in der Rohrwand (5) in Gewindeeingriff zu stehen.

10. Anbohrschelle (3) nach irgendeinem der vorhergehenden Ansprüche, wobei:
- die Außenfläche (16) des Einsatzes (13) mit einem Gewinde versehen ist, das sich über das erste Ende hinaus zumindest teilweise hin zum Greifelement (19) erstreckt, und
- eine radial nach innen gerichtete Fläche des Kompensators (10) mit einem Gewinde versehen ist, das ausgestaltet ist, um mit dem Gewinde (15) an der Außenfläche (16) des Einsatzes (13) in Eingriff zu kommen.

11. Anbohrschelle (3) nach irgendeinem der vorhergehenden Ansprüche, wobei das Gehäuse (6) ferner ein Kupplungselement (26) umfasst, das ausgestaltet ist, um während des Gebrauchs fluiddicht mit dem zweiten Rohr (2) verbunden zu werden.

12. Verfahren zum Einrichten einer Fluidverbindung zwischen einem ersten Rohr (1) und einem zweiten Rohr (2) durch Gebrauch eines Anbohrschelle (3) nach irgendeinem der vorhergehenden Ansprüche, wobei das Verfahren die folgenden Schritte umfasst:
- Befestigen des Gehäuses (6) mit dem darin angeordneten Kompensator (10) an einer Außenfläche (11) der Rohrwand (5) des ersten Rohres (1),
- Verbinden des zweiten Rohres (2) mit dem Gehäuse (6),
- Einrichten des Gewindeloches (4) in der Rohrwand (5) über die durchgehende Öffnung im Gehäuse (6),
- Einschrauben des Gewindes (15) des Einsatzes (13) in das Gewindeloch (4), um dadurch das Greifelement (19) mit einer Gegenfläche (20) des Kompensators (10) in Eingriff zu bringen und den Kompensator (10) hin zur Rohrwand (5) vorzuspannen, sodass der Kompensator (10) und/oder der erste Dichtungsring (8), falls vorhanden, mit der Rohrwand (5) in Eingriff gebracht wird, und
- Verschließen des Hohlraums (7) mit dem Verschluss (9).

## Revendications

1. Collier de prise en charge (3) comprenant :
- un boîtier (6) destiné à être serré contre un premier tuyau (1) afin d'établir un raccordement fluidique entre le premier tuyau (1) et un second tuyau (2), le boîtier (6) comprenant :
- une cavité (7) formant une partie du raccordement fluidique entre le premier et le second tuyaux (1,2) lors de l'utilisation,
- une ouverture traversante conçue pour permettre l'établissement d'un trou fileté (4) dans une paroi de tuyau (5) du premier tuyau (1) et la fixation du collier de prise en charge (3) au premier tuyau (1), l'ouverture traversante étant pourvue d'une fermeture (9) permettant de fermer la cavité (7) au niveau d'une extrémité orientée à l'opposé du trou (4) à établir dans la paroi de tuyau (5),
- un compensateur (10) disposé dans la cavité (7) :
- entouré circonférentiellement par le boîtier (6), et
- adjacent à une surface externe (11) de la paroi de tuyau (5),
le compensateur (10) ayant un alésage de compensateur traversant (12) conçu pour encercler le trou fileté (4) au niveau de la surface externe (11) de la paroi de tuyau (5), et
- un insert (13) conçu pour être disposé en partie à l'intérieur de l'alésage de compensateur (12), l'insert (13) comprenant :
- un alésage d'insert traversant (14),
- un filetage (15) au niveau d'une surface externe (16) d'une première extrémité (17) de l'insert (13), le filetage (15) étant conçu pour se mettre en prise avec le trou fileté (4) dans la paroi de tuyau (5) lors de l'utilisation, et
- un élément de préhension (19) au niveau d'une seconde extrémité (18) de l'insert (13), l'élément de préhension (19) étant conçu pour se mettre en prise avec une surface d'accouplement (20) du compensateur (10) et solliciter le compensateur (10) vers la paroi de tuyau (5), lorsque le filetage (15) de l'insert (13) est mis en prise avec le trou fileté (4) dans la paroi de tuyau (5).

2. Collier de prise en charge (3) selon la revendication 1, dans lequel le compensateur (10) est fabriqué à partir d'un matériau résilient, tel que le caoutchouc, le polytétrafluoroéthylène (PTFE), le polyoxyméthylène (POM) ou le silicone.

3. Collier de prise en charge (3) selon la revendication 1 ou 2, comprenant en outre une première bague d'étanchéité (8) conçue pour être disposée entre le compensateur (10) et la paroi de tuyau (5) lors de l'utilisation afin de former une étanchéité hermétique aux fluides entre ceux-ci.

4. Collier de prise en charge (3) selon l'une quelconque des revendications précédentes, comprenant en outre une deuxième bague d'étanchéité (21) disposée entre le compensateur (10) et le boîtier (6) afin de former une étanchéité hermétique aux fluides entre ceux-ci.

5. Collier de prise en charge (3) selon la revendication 4, dans lequel les première et deuxième bagues d'étanchéité (8,21) forment des parties d'un élément d'étanchéité unitaire (23).

6. Collier de prise en charge (3) selon la revendication 5, dans lequel l'élément d'étanchéité (23) comprend une troisième bague d'étanchéité (24) conçue pour former une étanchéité entre le compensateur (10) et à la fois la paroi de tuyau (5) et le boîtier (6) lors de l'utilisation.

7. Collier de prise en charge (3) selon l'une quelconque des revendications 3 à 5, dans lequel le compensateur (10) comprend une ou plusieurs rainures de bague (22) permettant de supporter ladite ou lesdites bagues d'étanchéité (8,21,24).

8. Collier de prise en charge (3) selon l'une quelconque des revendications précédentes, dans lequel l'élément de préhension (19) est une bride annulaire s'étendant radialement à l'écart de l'alésage d'insert (14).

9. Collier de prise en charge (3) selon l'une quelconque des revendications précédentes, dans lequel une zone d'une surface du compensateur (10) orientée vers la cavité (7) est plus grande qu'une zone du filetage (15) de l'insert (13) conçu pour être en prise filetée avec l'alésage fileté (4) dans la paroi de tuyau (5) lors de l'utilisation.

10. Collier de prise en charge (3) selon l'une quelconque des revendications précédentes, dans lequel :
- la surface externe (16) de l'insert (13) est pourvue d'un filetage s'étendant au-delà de la première extrémité au moins en partie vers l'élément de préhension (19), et
- une surface du compensateur (10) orientée radialement vers l'intérieur est pourvue d'un filetage conçu pour se mettre en prise avec le filetage (15) au niveau de la surface externe (16) de l'insert (13).

11. Collier de prise en charge (3) selon l'une quelconque des revendications précédentes, dans lequel le boîtier (6) comprend en outre un élément d'accouplement (26) conçu pour être raccordé de manière étanche aux fluides au second tuyau (2) pendant l'utilisation.

12. Procédé d'établissement d'un raccordement fluidique entre un premier tuyau (1) et un second tuyau (2) à l'aide d'un collier de prise en charge (3) selon l'une quelconque des revendications précédentes, le procédé comprenant les étapes suivantes :
- la fixation du boîtier (6), avec le compensateur (10) disposé à l'intérieur, sur une surface externe (11) de la paroi de tuyau (5) du premier tuyau (1),
- le raccordement du second tuyau (2) au boîtier (6),
- l'établissement du trou fileté (4) dans la paroi de tuyau (5) par le biais de l'ouverture traversante dans le boîtier (6),
- le vissage du filetage (15) de l'insert (13) dans le trou fileté (4) afin de mettre ainsi en prise l'élément de préhension (19) avec une surface d'accouplement (20) du compensateur (10) et de solliciter le compensateur (10) vers la paroi de tuyau (5), de sorte que le compensateur (10) et/ou la première bague d'étanchéité (8), lorsqu'ils sont présents, sont amenés en prise avec la paroi de tuyau (5), et
- la fermeture de la cavité (7) avec la fermeture (9).
